# EUROPÄISCHE PATENTSCHRIFT

(11) **EP 2 233 457 B1**
(45) Veröffentlichungstag und Bekanntmachung des Hinweises auf die Patenterteilung: **06.06.2012**
(21) Anmeldenummer: 10152879.2
(22) Anmeldetag: 08.02.2010
(51) Int. Cl.: C04B 41/65

(54) **Verfahren zur photokatalytischen Aktivierung von Bauteiloberflächen**
Method for photocatalytically activating component surfaces
Procédé d'activation photo-catalytique de surfaces de composants

(30) Priorität: 24.03.2009 DE 102009014602
(43) Veröffentlichungstag der Anmeldung: 29.09.2010
(60) Teilanmeldung: 11007440.8
(73) Patentinhaber: Dyckerhoff AG, 65203 Wiesbaden (DE)
(72) Erfinder: Droll, Dr., Klaus, 55126 Mainz (DE)
(74) Vertreter: Solf, Alexander

(56) Entgegenhaltungen:
- WO-A1-01/00541
- JP-A- 10 158 079

## Beschreibung

Die Erfindung betrifft ein Verfahren zur photokatalytischen Aktivierung von insbesondere mineralischen Bauteilen an mindestens einer Oberfläche, die eine poröse, insbesondere mineralische Bindemittelmatrix aufweisen. Die Bauteiloberflächen können unbeschichtet und z.B. eine Sichtbetonoberfläche sein oder eine erhärtete bzw. abgebundene Beschichtung, z.B. einen Putz oder Mörtel mit einer porösen z.B. mit mineralischen Bindemitteln gebundene Matrix aufweisen. Porös im Sinne der Erfindung meint, dass z.B. aufgrund von Erhärtungsreaktionen von mineralischen Bindemitteln Poren und Kapillaren in der Matrix vorhanden sind.

Bauteile auf Basis mineralisch gebundener, kristalliner Matrix, mit denen sich die Erfindung insbesondere befasst, sind Baukörper, die so verwendet werden sollen, dass sie im eingebauten Zustand z.B., in einem Gebäude zumindest eine Licht empfangende Oberfläche bilden und hergestellt sind aus einer Mischung aus mindestens einem mineralischen, anorganischen Bindemittel wie z.B. Zement, Baukalk und/oder Gips oder Anhydrit, und in der Regel Zuschlagstoffen wie z.B. Sanden, Kiesen und Splitten und/oder Zusatzstoffen wie z.B. Flugaschen, Steinmehlen und/oder Zusatzmitteln wie z.B. Fließmitteln, Stabilisatoren, Hydrophobierungsmitteln. Diese Bauteile sind z.B. in Schalungen oder Formen hergestellte Betonfertigteile oder in Schalungen erzeugte Ortbetonbauteile. Gleichermaßen sind diese Bauteile z.B. Betonwaren, das sind meist Betonerzeugnisse wie Betonpflastersteine, Betonrohre, Gehweg- und Belagplatten, Bord- und Randsteine, Bahnsteigkanten oder dgl. Zudem sind diese Bauteile z.B. Betonwerksteine oder Estrichböden und Terrazzoböden oder Mörtel oder Putze auf Baukörperoberflächen. Die Herstellung und Zusammensetzung dieser Bauteile werden z.B. im Handbuch "Betonfertigteile - Betonwerkstein - Terrazzo", Verlag Bau + Technik GmbH, Düsseldorf, 1999, insbesondere in den Kapiteln 5, 6 und 7 beschrieben. Die Erfindung betrifft aber auch mit Gips oder Anhydrit gebundene Bauteile, insbesondere mit Gips gebundene Fertigprodukte wie Gipskartonplatten, Gipswände, Anhydritestriche u. dgl.

Es ist bekannt, Oberflächen von erhärteten Bauteilen mit photokatalytisch wirkenden Nanopartikeln wie TiO₂-Partikeln zu beschichten, wodurch eine Selbstreinigung der Oberfläche erzielt wird. Neben dieser selbstreinigenden Wirkung können mit einem Photokatalysatorfilm beschichtete Oberflächen aktiv zur Reinigung der sie umgebenden Luft beitragen, indem z.B. toxische Gase wie NO und NOₓ photokatalytisch zu NO₂ oxidiert werden, woraus in wässrigem Milieu ungiftige Nitrat-Ionen resultieren. Als Beschichtungen sind organisch gebundene Filme, Putze oder Mörtel verwendet worden, die nachträglich nach der Erstellung eines Bauwerks oder nach dem Erhärten der Bauteile z.B. mit wässrigen Suspensionen auf die Bauteile aufgebracht werden (z.B. WO 01/00541 A1, EP 784 034 A1, EP 614 682 A1, DE 10 2005 057 770 A1, US 2 007/0027015 A1, EP 1 020 564 A1, US 2 006/0147756 A1, DE 10 2005 057 747 A1). Dabei werden auch Premixe aus einem hydraulischen Bindemittel und photokatalytisch wirkenden Partikeln zur Herstellung wässriger Mischungen angewendet (EP 1 564 194 A2) und die wässrigen Mischungen auf die Oberflächen aufgespritzt oder aufgesprüht (EP 1 020 564 A1).

Alle diese verschiedenartigen Beschichtungen haben generell den Nachteil, dass die außer den photokatalytisch wirkenden Nanoteilchen anderen vorhandenen Nebenbestandteile die Effektivität der Photokatalyse beeinträchtigen können und/oder mengenmäßig zu viele der teuren photokatalytischen Nanoteilchen in unwirksamem Zustand enthalten und/oder sich die Beschichtung vom Untergrund durch Witterungseinflüsse löst und/oder die Beschichtung durch Umwelteinflüsse zerstört wird.

Eine andere, relativ teure Methode ist, die photokatalytisch wirkenden Nanoteilchen der Grundmischung der Bauteile zuzumischen. Dabei ist zwar eine sehr große Menge an Nanoteilchen erforderlich, die Einbindung der Nanoteilchen in die Matrix ist aber sehr viel fester als in Beschichtungen, weshalb deren Wirkung dauerhafter ist (z.B. EP 885 857 A1, IT 1 286 492 A1).

Aufgabe der Erfindung ist, insbesondere geformte Bauteile der oben beschriebenen Art auf einfache Weise mit geringen Mengen an photokatalytisch aktiven Teilchen auszurüsten und dabei dennoch eine sehr effektive, dauerhafte photokatalytische Wirkung zu erzielen.

Diese Aufgabe wird durch die Merkmale des Anspruchs 1 gelöst. Vorteilhafte Weiterbildungen der Erfindung werden in den von diesem Anspruch abhängigen Unteransprüchen angegeben.

Nach der Erfindung wird zunächst Wasser auf die Oberfläche des mineralischen Bauteils gebracht. Die Matrix des Bauteils saugt das Wasser im Wesentlichen kapillar auf bis eine z.B. vorübergehende gewisse Sättigung bzw. Ausfüllung der Poren und Kapillaren erreicht ist. Danach bildet sich ein dünner Wasserfilm auf der Oberfläche des Bauteils. Dieser Wasserfilm wird erfindungsgemäß angestrebt und erzeugt; er sollte etwa eine Dicke zwischen 0,1 und 5 mm, insbesondere zwischen 0,1 und 1 mm aufweisen und auch bei schrägen oder vertikalen Flächen an der Oberfläche haften bleiben, Unmittelbar nach Auftragen eines Wasserfilms z.B. innerhalb weniger Minuten bevor der Wasserfilm verdunstet ist oder vom Bauteil aufgesaugt worden ist, wird auf den Wasserfilm eine trockene Mischung aus mindestens einem mineralischen, feinteiligen, anorganischen Bindemittel und photokatalytisch aktiven Teilchen aufgebracht, z.B. direkt aufgedüst, aufgestreut, aufgeblasen oder indirekt, z.B. mit einer Walze, aufgewalzt.

Es liegt im Rahmen der Erfindung, die Teilchensorten auch nacheinander aufzubringen und die wässrige Oberfläche z.B. zunächst mit den trockenen Bindemittelteilchen und anschließend mit trockenen photokatalytisch aktiven Teilchen zu belegen oder umgekehrt.

Nach der Erfindung befindet sich zum Zeitpunkt des Auftragens der trockenen Teilchen soviel Wasser auf der Oberfläche, dass die aufgebrachten Teilchen zunächst adhäsiv festgehalten werden. Anschließend bilden sich erste chemische Reaktionsphasen aus Lösungen, z.B. Ettringit, aus Zementmineralen oder erste Gipsphasen im Falle von Stuckgips oder Anhydrit als Bindemittel des oder der Bindemittel(s) mit dem Wasser zumindest an der Oberfläche der Bindemittelteilchen, die ein erstes Anbacken bzw. Haften der Bindemittelteilchen an der Oberfläche des Bauteils und eine erste. Bindung der photokatalytisch aktiven Teilchen, die chemisch nicht mit dem Wasser und den Bindemittelteilchen reagieren, an die Bindemittelteilchen bewirken, wobei aber wohl auch noch kapillare Kräfte der Bauteilmatrix das Haften der Teilchen unterstützen. Die ersten Reaktionsphasen der Bindemittel gehen in kristalline Hydratphasen über, deren Kristalle sich in der Oberflächenmatrix des Bauteils verkrallen und die photokatalytisch aktiven Teilchen derart umgreifen bzw. einbetten, dass sie fest in der Kristallmatrix gehaltert werden.

Die Bildung der Reaktionshydratphasen der Bindemittel verbraucht einen erheblichen Anteil des aufgebrachten Wasserreservoirs im Oberflächenbereich des Bauteils, woraus eine Verfestigung des Teilchenauftrags und auch zumindest eine Teilentwässerung der Oberflächenbereiche des Bauteils resultieren. Zur Unterstützung und gegebenenfalls Beschleunigung der Bildung der Hydratphasen der Bindemittel kann zweckmäßigerweise nach dem Aufbringen der trockenen Teilchen nachträglich noch Wasser auf die Oberfläche aufgebracht werden, insbesondere dann, wenn das Oberflächenwasser zu schnell verdunstet oder vom Bauteil aufgesaugt worden ist.

Die Wassermenge, die auf die Oberfläche des Bauteils aufzubringen ist, ist empirisch zu ermitteln. Sie ist insbesondere abhängig von der Kapillar- und Porenstruktur der Matrix des Bauteils und vom Wasserbedarf der in Mehl- bzw. Pulverform aufgetragenen trockenen Bindemittelteilchen und der trockenen photokatalytisch aktiven Partikel.

Nach der Erfindung werden an sich bekannte photokatalytisch aktive Teilchen, z.B. TiO₂-Teilchen mit Teilchengröße im Nanobereich, z.B. zwischen 1 und 1000 nm, und/oder Mikrobereich, z.B. zwischen 1 und 50 µm, auf eine im eingebauten Zustand Licht empfangende Oberfläche eines erhärteten mineralisch abgebundenen Bauteils mit z.B. einer Matrix aus Zement übertragen bzw. aufgebracht. Erhärtet meint, dass das Bauteil sich nicht mehr im Frischzustand bzw. im sogenannten grünen oder jungen Zustand, sondern im Festzustand (im Folgenden auch Festbauteil genannt) befindet, d.h. die mineralischen Bindemittel haben ihre vollständige kristalline Feststruktur entwickelt, wie das z.B. beim Festbeton oder bei erhärteten Gipsbauteilen der Fall ist.

Es ist überraschend, dass die photokatalytisch aktiven Teilchen fest und dauerhaft ohne zusätzliche Haftvermittler oder Haftmittel an der Oberfläche eines Bauteils angeordnet bzw. eingebunden werden können und auch nach dem Erhärten des Bindemittels an der Oberfläche des Bauteils festsitzen, denn die Teilchen reagieren chemisch nicht mit Bestandteilen der Bindemittel und es musste erwartet werden, dass zu viele Teilchen lose an der Oberfläche liegen bleiben und leicht entfernbar sind, z.B. abfallen oder absanden. Offenbar werden die Teilchen zunächst durch Kapillarkräfte von Kapillaren an der Festbauteiloberfläche über adhäsive Wasserbrücken festgehalten. Die Kapillaren entstehen bekanntlich bei der Erhärtung der Bindemittel durch bei der Reaktion nicht verbrauchtes Überschusswasser in den Frischbauteilmischungen. Durch sie kann das Wasser bei und nach der Erhärtung der Bindemittel von der Oberfläche des Bauteils in das Innere des Bauteils wandern und dort bei der verfestigenden Bindemittel-Kristallbildung (z.B. Calziumsilikathydrat- oder Calziumaluminathydrat-Phasenbildung und/oder Gipsdihydratbildung) verbraucht wird. Anschließend werden die photokatalytisch wirkenden Teilchen in die ersten Hydratphasen des Bindemittels des Auftrags und danach in die Kristallnadel- bzw. Kristallplättchenstruktur der erhärtenden Bindemittel z. B. des erhärtenden Zements, dem sogenannten Zementstein, eingefangen bzw. eingebettet und dort mechanisch festgehalten, wobei für Licht und/oder Gase wie Luft frei zugängliche Teilchenoberflächenbereiche der photokatalytisch aktiven Teilchen verbleiben.

Als photokatalytisch aktive Teilchen bzw. Partikel werden z.B. TiO₂ und/oder ZnO und/oder andere bekannte photokatalytisch aktive Partikel, insbesondere mineralmodifizierte photokatalytisch aktive Partikel mit einem breiteren Absorptionspektrum z.B. wie in DE 10 2005 057 770 A1, DE 10 2005 057 747 A1 oder WO 01/00541 A1 beschrieben, die durch UV-Strahlung und/oder sichtbares Licht photokatalytisch angeregt werden können, verwendet. Die photokatalytisch aktiven Teilchen werden z.B. in Form von trockenen Pulvern mit Teilchenkorngrößen z.B. von 5 nm bis 50 µm, insbesondere von 20 bis 100 nm als sogenannte Nanoteilchen und/oder als Mikroteilchen mit Korngrößen z.B. von 0,1 bis 50 Am, insbesondere von 0,1 bis 1 µm verwendet.

Die photokatalytisch aktiven Teilchen können z.B. auch in Form von wässrigen Pulver-Suspensionströpfchen mit Tröpfchendurchmessern z.B. von 0,1 bis 1000 µm, insbesondere von 1 bis 50 µm aufgebracht werden, wenn die Bindemittelteilchen und die photokatalytisch aktiven Teilchen getrennt aufgebracht werden auf den Wasserfilm der angefeuchteten Bauteiloberfläche.

Die photokatalytisch aktiven Teilchen werden auf eine Oberfläche vorzugsweise homogen verteilt angeordnet mit z.B. 0,1 bis 100, vorzugsweise 0,1 bis 50, insbesondere mit 2 bis 10 Flächen-%, d.h., dass die Oberfläche mit entsprechenden Mengen der Teilchen belegt ist. Die Belegung kann homogen flächenverteilt oder inhomogen z.B. nach einem oder mehreren Mustern oder als Computerpunktverteilung völlig unregelmäßig flächenverteilt werden, z.B. wenn die Bindemittelteilchen und die photokatalytisch aktiven Partikel getrennt aufgebracht werden. Bei inhomogener Flächenverteilung erfolgt z.B. eine Flächenbelegung der Teilchenmischung aus Bindemittelteilchen und photokatalytisch aktiven Partikeln von 0,1 bis 100, vorzugsweise 0,1 bis 50 Flächen-%, insbesondere von 2 bis 10 Flächen-%. Die Gesamtmenge der Mischung liegt vorzugsweise unter 100 g/m², insbesondere unter 20g/m² und damit weit unter den Mengen, die mit nassen Beschichtungen wie Putzen oder Mörteln erforderlich sind und z.B. über mindestens 30 bis 60 g/m² betragen, um den gewünschten Halt auf der Oberfläche des Bauteils und gleiche Wirkungen zu gewährleisten.

Das Aufbringen der photokatalytisch aktiven Teilchen und der Bindemittelteilchen erfolgt unmittelbar oder mittelbar auf die mit einem Wasserfilm belegte Oberfläche des Bauteils. Unmittelbar erfolgt die Aufbringung z.B. durch Aufstäuben, Aufstreuen, Aufspritzen oder Aufdüsen auf die wasserhaltige Oberfläche des Bauteils.

Zur mittelbaren Übertragung werden Trägervorrichtungen, z.B. Folien oder Walzen verwendet, auf denen vorher die Teilchen angeordnet worden sind und durch Auflegen und anschließendes Abziehen der Folien oder durch Aufwalzen mit der Walze auf die angefeuchtete, einen Wasserfilm aufweisende Bauteiloberfläche übertragen werden.

Nach der Erfindung werden die photokatalytisch aktiven Teilchen mit einem Bindemittelpulver bzw. Bindemittelmehl, z.B. aus Zement, Baukalk und/oder Gips oder Anhydrit vor dem Aufbringen trocken gemischt. Die Bindemittelmehlteilchen reagieren dann nach dem Aufbringen der trockenen Bindemittel-aktive Teilchen-Mischung auf die nasse Oberfläche mit dem vorhandenen Wasser an der Oberfläche des Bauteils und bilden erste Reaktionsphasen, die die photokatalytisch aktiven Teilchen zunächst oberflächlich beim Ansteifen und Erstarren einbinden und beim anschließenden Erhärten mit den Erhärtungskristallphasen dieses Bindemittels die Teilchen in der Kristallmatrix dieses Bindemittels fest haltern.

Zweckmäßigerweise weisen verwendbare Mischungen aus photokatalytisch aktiven Teilchen und Bindemittelpulver, z.B. aus Zement, Gewichtsmengenverhältnisse von 90:10 bis 10:90, insbesondere von 80:20 bis 20:80 auf. Die Bindemittel können mit Korngrößenbereichen zwischen 10 nm und 100 µm eingesetzt werden. Vorzugsweise werden dabei Zemente mit Korngrößenbereichen zwischen 0,1 µm und 50 µm und/oder Feinstzemente mit Korngröβenbereichen zwischen 0,1 und 10 µm verwendet. Insbesondre wird ein Bindemittel verwendet, das auch für die Herstellung des Bauteils verwendet worden ist und z.B. ein Zement ist.

Am erfindungsgemäß behandelten Bauteil kann der Fachmann ohne weiteres durch eine Analyse der Oberfläche des Bauteils erkennen, ob die photokatalytisch aktiven Teilchen erfindungsgemäß aufgebracht wurden. Z.B. erkennt man das daran, dass die Teilchen in einer zusätzliche, gesonderten, gegenüber der Bauteiloberfläche durch Grenzflächen abgegrenzten kristallinen Bindemittelmatrix z.B. in Zementstein oder Gipsdihydratstein fest eingebunden sind und nicht ungebunden auf der Oberfläche liegen. Insbesondere aber ist die Erfindung auch daran erkennbar, dass der Auftrag bzw. die Verteilung des Auftrags auf der Oberfläche fleckenartig ausgebildet ist, mit voneinander auf Abstand sich befindenden Zonen aus Bindemittelsteinmaterial, in welches die photokatalytisch aktiven Teilchen eingebettet sind.

Bei der Herstellung von Beschichtungen von Bauteilen nach dem Stand der Technik, bei denen die photokatalytisch aktiven Teilchen einer wässrigen Bindemittelmischung zugemischt werden, befinden sich im frischen oder erhärteten Zustand der Beschichtung zwar auch Teilchen an der Oberfläche der Beschichtung; diese Teilchen sind aber weniger wirksam, weil ihre Oberfläche meist mit Fremdstoffen, z.B. Porenlösungsresten, das sind z.B. Calciumhydroxid oder sulfatfilme, belegt ist. Bei gleicher Bauteiloberflächenmengenbelegung mit aktiven Teilchen führt dies nachweislich zu einer geringeren Aktivität der Oberfläche.

Durch die Erfindung werden ungewöhnlich viele Vorteile angehäuft. Es werden sehr viel geringere Mengen an teuren photokatalytisch aktiven Teilchen bei gleicher photokatalytischer Wirkung benötigt. Die verfügbare Menge der Teilchen an der Oberfläche ist auf einfache Weise vorher bestimmbar durch eine einfache Dosierung. Die Belegung der Oberfläche bezüglich der Menge und/oder der Art der Teilchen und/oder der Körnungen kann z.B. zonal z.B. mit Schablonen erfolgen. Verwendbar sind trockene handelsübliche Pulver. Ein Mischproblem tritt bei den trockenen Pulvern nicht auf wie das bei wasserhaltigen Frisch-Bindemittelmischungen der Fall ist, denen insbesondere die Nanoteilchen für eine homogene Dispergierung mit erheblichem Aufwand zugemischt werden müssen und bei denen eine homogene Verteilung der Nanoteilchen in der Mischung sehr viel schwieriger ist. Nach der Erfindung lassen sich Nanoteilchen ebenso leicht aufbringen wie Mikroteilchen oder Mischungen daraus.

In jedem Fall kann aber die photokatalytische Effektivität der aktiven Teilchen erheblich gesteigert werden, weil sie an der Oberfläche des Bauteils freier zugänglich sind als bei Bauteilen, die die Teilchen eingemischt enthalten bei gleicher Menge an der Oberfläche der Bauteile.

Ein weiterer wesentlicher Vorteil der Erfindung ist, dass das Bauteil durch den Zusatz der photokatalytisch aktiven Teilchen keine Festigkeitseinbuße erfährt. Bei Bauteilen, denen die photokatalytisch aktiven Teilchen zugemischt worden sind, schwächen diese Teilchen die Festigkeit, weil diese inerten Partikel nicht mit Bindemittelbestandteilen reagieren und somit zur Festigkeit keinen Beitrag leisten.

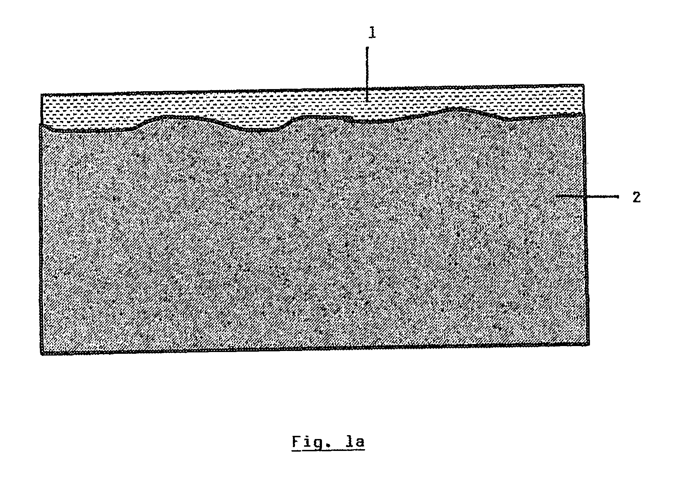

Anhand der Zeichnung wird das erfindungsgemäße Verfahren beispielhaft näher erläutert. Es zeigen die Fig. 1a bis 1e schematisch, wie das erfindungsgemäße Verfahren abläuft.

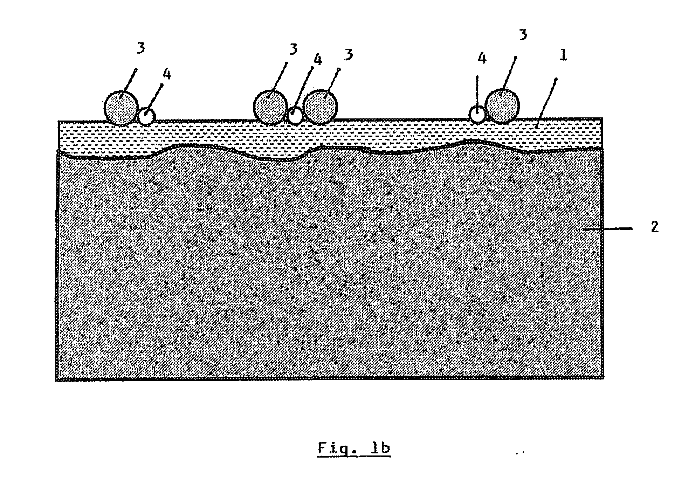

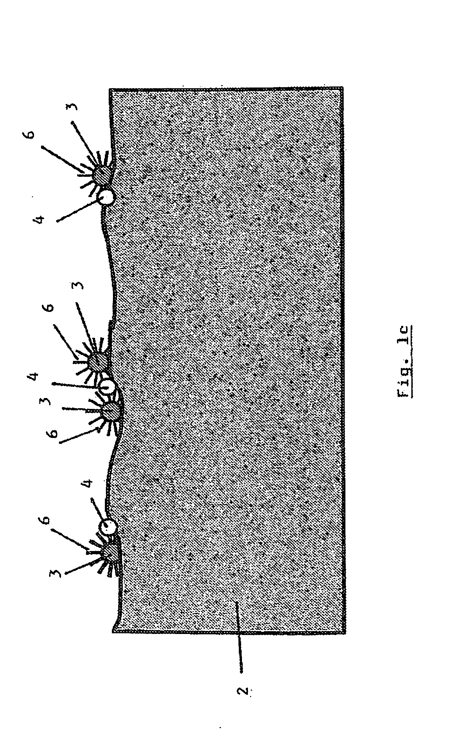

Fig. la zeigt einen Wasserfilm 1 auf einem Bauteil 2, z.B. einem Betonbauteil. Auf den und zumindest teilweise in den Wasserfilm 1 werden als Gemenge Bindemittelmehlteilchen 3, z.B. Zementteilchen, und photokatalytisch, wirkende Mehlpartikel 4, z.B. TiO₂-Partikel, aufgebracht (Fig. 1b). Die Bindemittelmehlteilchen 3 beginnen in den ersten Minuten nach dem Auftrag mit dem Wasser zu reagieren und bilden erste wasserhaltige Reaktionsphasen 6 zumindest an ihrer Kornoberfläche bzw. Teilchenoberfläche und kitten die photokatalytisch aktiven Teilchen 4 an die Bindemittelteilchen 3 sowie an die Bauteiloberfläche, wobei Wasser chemisch verbraucht wird, verdunstet und/oder tiefer in die Matrix des Bauteils 2 eindringt (Fig. 1c). Danach gehen die ersten Hydratkristalle 6 in die Erhärtungshydratphasen über, wobei die Bindemittelminerale und ersten Reaktionsphasen der Bindemittelteilchen 4 aufgebraucht werden bzw. chemisch umgewandelt werden in die kristallinen Erhärtungshydratphasen, die Bindemittelsteinmaterial bilden. Diese Hydratkristallmatrix umfängt die photokatalytisch aktiven Teilchen 4, insbesondere nur teilweise und die Kristalle der Hydratkristallmatrix verbinden sich bzw. verankern sich mit bzw. in der Matrix des Oberflächenbereichs des Bauteils 2 bzw. sie wachsen auf die. Oberflächenmatrix des Bauteils auf und/oder in die Oberflächenmatrix des Bauteils 2 ein.

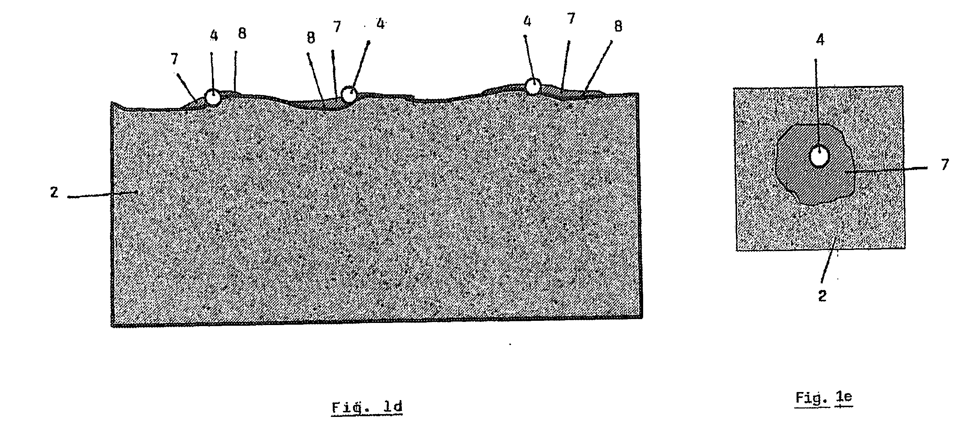

Im ausgehärteten Zustand des Bindemittels sieht der Auftrag und die Haftung bzw. Fixierung der photokatalytisch aktiven Teilchen 4 in etwa so fleckenartig aus wie aus Fig. 1d in einer Seitenansicht und in Fig. 1e in einer Draufsicht schematisch erkennbar ist. Die photokatalytisch aktiven Teilchen 4 sind teilbereichsweise umgeben von erhärtetem Bindemittelsteinmaterial, z.B. Zementsteinmaterial 7, z.B. einer Dicke zwischen 1 und 1000 µm und einem Fleckendurchmesser zwischen 10 und 5000 µm, der zur Bauteilmatrix eine physikalische Grenzschicht bzw. Grenzphase 8 zwischen der Bauteilmatrix an der Oberfläche und dem z.B. Zementsteinmaterial 7 aus dem Bindemittel des Auftrags bildet, woran die Durchführung des erfindungsgemäßen Verfahrens erkennbar ist. Die photokatalytisch aktiven Teilchen 4 ragen mit freien Oberflächenbereichen aus dem z.B. Zementsteinmaterial 7 heraus, die die Aktivität entsprechend gewährleisten.

## Patentansprüche

1. Verfahren zur photokatalytischen Aktivierung mindestens einer Oberfläche eines Bauteils mit poröser, insbesondere kapillarporöser, mineralischer Bindemittelmatrix, wie insbesondere eines mineralischen Bauteils, z.B. eines Betonbauteils, einer Mörtel- oder Putzbeschichtung oder eines Gipsbauteils, die hergestellt sind aus wässrigen Mischungen aus mindestens einem mineralischen, anorganischen Bindemittel, wie Zement, Baukalk, Gips und/oder Anhydrit, und in der Regel mindestens einem Zuschlagstoff und/oder mindestens einem Zusatzstoff und/oder mindestens einem Zusatzmittel,
**dadurch gekennzeichnet,dass**
a) Wasser auf die photokatalytisch zu aktivierende Oberfläche des Bauteils aufgebracht wird, bis sich ein Wasserfilm bildet,
b) unmittelbar danach trockene, feinteilige Bindemittelmehlteilchen und feinteilige photokatalytisch aktive Teilchen in Mehlform auf den Wasserfilm aufgebracht werden,
c) die Bindemittelmehlteilchen mit Wasser des Wasserfilms reagieren gelassen werden,
d) der Wasserfilm z.B. durch Verdunsten und/oder Aufsaugen durch die poröse Bauteilmatrix verschwinden gelassen wird,
e) die Bindemittelmehlteilchen zu Bindemittelstein mit Hydratkristallmatrix erhärten gelassen werden, derart, dass
f) die photokatalytisch aktiven Teilchen in den Bindemittelstein mit frei bleibenden Oberflächen eingebunden werden und
g) die Hydratkristallmatrix des Bindemittelsteins sich mit der Oberflächenmatrix des Bauteils fest verbindet.

2. Verfahren nach Anspruch 1,
**dadurch gekennzeichnet, dass**
die Bindemittelmehlteilchen und die feinteiligen photokatalytisch aktiven Teilchen als trockene Mischung aufgebracht werden.

3. Verfahren nach Anspruch 1,
**dadurch gekennzeichnet, dass**
die feinteiligen photokatalytisch aktiven Teilchen in Form von wässrigen Pulversuspensionströpfchen aufgebracht werden.

4. Verfahren nach Anspruch 1 oder 3,
**dadurch gekennzeichnet, dass**
die Bindemittelmehlteilchen und die feinteiligen photokatalytisch aktiven Teilchen nacheinander aufgebracht werden.

5. Verfahren nach einem oder mehreren der Ansprüche 1 bis 4,
**dadurch gekennzeichnet, dass**
die Bindemittelmehlteilchen und die feinteiligen photokatalytisch aktiven Teilchen als trockenes Gemenge überwiegend in Form diskreter Fleckenbereiche auf die Bauteiloberfläche aufgebracht werden, so dass die Bauteiloberfläche nicht vollflächig bedeckt ist, wobei die photokatalytisch aktiven Teilchen mit Flächenprozenten von 0,1 bis 50, insbesondere von 2 bis 10 Flächenprozent aufgebracht werden.

6. Verfahren nach einem oder mehreren der Ansprüche 1 bis 5,
**dadurch gekennzeichnet, dass**
die photokatalytisch aktiven Teilchen mit Teilchengrößen im Nanobereich zwischen 1 und 1000 nm und/oder im Mikrobereich zwischen 1 und 50 µm aufgebracht werden.

7. Verfahren nach einem oder mehreren der Ansprüche 1 bis 4 und 6,
**dadurch gekennzeichnet, dass**
die photokatalytisch aktiven Teilchen, vorzugsweise homogen verteilt, mit Flächen-% von 0,1 bis 100, vorzugsweise von 0,1 bis 50, insbesondere von 2 bis 10 Flächen-%, aufgebracht werden.

8. Verfahren nach einem oder mehreren der Ansprüche 1 bis 7,
**dadurch gekennzeichnet,dass**
die Bindemittelmehlteilchen und die photokatalytisch aktiven Teilchen mittelbar z.B. über Folien oder Walzen aufgebracht werden.

9. Verfahren nach einem oder mehreren der Ansprüche 1 bis 8,
**dadurch gekennzeichnet,dass**
Mischungen aus photokatalytisch aktiven Teilchen und Bindemittelmehlteilchen in Gewichtsmengenverhältnissen von 90:10 bis 10:90, insbesondere von 80:20 bis 20:80 aufgebracht werden.

10. Verfahren nach einem oder mehreren der Ansprüche 1 bis 9,
**dadurch gekennzeichnet,dass**
Bindemittel mit Korngrößenbereichen zwischen 10 nm und 100 µm verwendet werden.

11. Verfahren nach Anspruch 10,
**dadurch gekennzeichnet,dass**
Bindemittel mit Korngrößenbereichen zwischen 0,1 µm und 50 µm und/oder Feinstzemente mit Korngrößenbereichen zwischen 0,1 und 10 µm verwendet werden.

## Claims

1. A process for the photocatalytic activation of at least one surface of a component with a porous, particularly capillary-porous, mineral binder matrix, such as in particular a mineral component, e.g. a concrete component, a mortar or plaster coating or a gypsum component, which are produced from aqueous mixtures of at least one mineral, inorganic binder, such as cement, building lime, gypsum and/or anhydrite, and generally at least one aggregate and/or at least one addition and/or at least one admixture,
**characterised in that**
a) water is applied on to the surface of the component to be photocatalytically activated until a film of water is formed,
b) immediately afterwards, dry, finely divided binder powder particles and finely divided photocatalytically active particles in powder form are applied on to the film of water,
c) the binder powder particles are allowed to react with water in the film of water,
d) the film of water is allowed to disappear e.g. by evaporation and/or absorption through the porous component matrix,
e) the binder powder particles are allowed to harden to form hardened binder paste with a hydrate crystal matrix, in such a way that
f) the photocatalytically active particles are bound into the hardened binder paste with surfaces remaining free and
g) the hydrate crystal matrix of the hardened binder paste binds firmly with the surface matrix of the component.

2. The process according to claim 1,
**characterised in that**
the binder powder particles and the finely divided photocatalytically active particles are applied as a dry mixture.

3. The process according to claim 1,
**characterised in that**
the finely divided photocatalytically active particles are applied in the form of aqueous powder suspension droplets.

4. The process according to claim 1 or 3,
**characterised in that**
the binder powder particles and the finely divided photocatalytically active particles are applied consecutively.

5. The process according to one or more of claims 1 to 4,
**characterised in that**
the binder powder particles and the finely divided photocatalytically active particles are applied as a dry mixture predominantly in the form of discrete spots on the component surface, so that the component surface is not covered all over, the photocatalytically active particles being applied with area percentages of 0.1 to 50, in particular 2 to 10, area %.

6. The process according to one or more of claims 1 to 5,
**characterised in that**
the photocatalytically active particles are applied with particle sizes in the nano range between 1 and 1000 nm and/or in the micro range between 1 and 50 µm.

7. The process according to one or more of claims 1 to 4 and 6,
**characterised in that**
the photocatalytically active particles, preferably homogeneously distributed, are applied with area percentages of 0.1 to 100, preferably 0.1 to 50, in particular 2 to 10, area %.

8. The process according to one or more of claims 1 to 7,
**characterised in that**
the binder powder particles and the photocatalytically active particles are applied indirectly, e.g. by means of films or rolls.

9. The process according to one or more of claims 1 to 8,
**characterised in that**
mixtures of photocatalytically active particles and binder powder particles are applied in quantitative ratios by weight of 90:10 to 10:90, and in particular 80:20 to 20:80.

10. The process according to one or more of claims 1 to 9,
**characterised in that**
binders with particle size ranges of between 10 nm and 100 µm are used.

11. The process according to claim 10,
**characterised in that**
binders with particle size ranges of between 0.1 µm and 50 µm and/or extremely fine cements with particle size ranges of between 0.1 and 10 µm are used.

## Revendications

1. Procédé d'activation photocatalytique d'au moins une surface d'un composant comprenant une matrice de liant minérale poreuse, en particulier poreuse par capillarité, comme en particulier celle d'un composant minéral, par exemple d'un composant en béton, d'un revêtement au mortier ou à l'enduit, ou d'un composant en plâtre, qui sont fabriqués à partir de mélanges aqueux constitués d'au moins un liant minéral, inorganique, comme le ciment, la chaux, le plâtre et/ou l'anhydrite, et en principe d'au moins un fondant et/ou d'au moins un additif et/ou d'au moins un adjuvant, **caractérisé en ce que**
a) on applique de l'eau sur la surface du composant à activer photocatalytiquement, jusqu'à ce qu'un film aqueux se forme,
b) immédiatement après, on applique des particules de liant en poudre finement divisées et sèches et des particules photocatalytiquement actives et finement divisées sous forme de poudre sur le film aqueux,
c) on fait réagir les particules de liant en poudre avec l'eau du film aqueux,
d) on fait disparaître le film aqueux, par exemple par évaporation et/ou aspiration à travers la matrice du composant poreuse,
e) on fait durcir les particules de liant en poudre pour donner un liant solide ayant une matrice de cristaux d'hydrate de sorte que
f) les particules photocatalytiquement actives soient incorporées dans le liant solide avec des surfaces qui restent dégagées et
g) la matrice de cristaux d'hydrate du liant solide se lie fermement avec la matrice de surface du composant.

2. Procédé selon la revendication 1,
**caractérisé en ce que**
les particules de liant en poudre et les particules photocatalytiquement actives finement divisées sont appliquées sous forme de mélange sec.

3. Procédé selon la revendication 1,
**caractérisé en ce que**
les particules photocatalytiquement actives finement divisées sont appliquées sous forme de gouttelettes d'une suspension aqueuse de poudre.

4. Procédé selon la revendication 1 ou 3,
**caractérisé en ce que**
les particules de liant en poudre et les particules photocatalytiquement actives finement divisées sont appliquées les unes après les autres.

5. Procédé selon l'une ou plusieurs des revendications 1 à 4,
**caractérisé en ce que**
les particules de liant en poudre et les particules photocatalytiquement actives finement divisées sont appliquées en tant que mélange sec principalement sous la forme de zones discrètes en tâches sur la surface du composant si bien que la surface du composant n'est pas couverte sur toute sa surface, les particules photocatalytiquement actives étant appliquées avec des pourcentages surfaciques allant de 0,1 à 50, en particulier de 2 à 10 pour-cent surfacique.

6. Procédé selon l'une ou plusieurs des revendications 1 à 5,
**caractérisé en ce que**
les particules photocatalytiquement actives sont appliquées avec des tailles de particules situées dans la plage du nanomètre entre 1 et 1000 nm et/ou dans la plage du micromètre entre 1 et 50 µm.

7. Procédé selon l'une ou plusieurs des revendications 1 à 4 et 6,
**caractérisé en ce que**
les particules photocatalytiquement actives, de préférence réparties de manière homogène, sont appliquées avec des pourcentages surfaciques allant de 0,1 à 100, de préférence de 0,1 à 50, en particulier de 2 à 10 % surfacique.

8. Procédé selon l'une ou plusieurs des revendications 1 à 7,
**caractérisé en ce que**
les particules de liant en poudre et les particules photocatalytiquement actives sont appliquées indirectement, par exemple par l'intermédiaire de films ou de rouleaux.

9. Procédé selon l'une ou plusieurs des revendications 1 à 8,
**caractérisé en ce que**
des mélanges constitués de particules photocatalytiquement actives et de particules de liant en poudre sont appliqués en des rapports en poids de 90/10 à 10/90, en particulier de 80/20 à 20/80.

10. Procédé selon l'une ou plusieurs des revendications 1 à 9,
**caractérisé en ce que**
des liants ayant des plages de tailles de particules entre 10 nm et 100 µm sont utilisés.

11. Procédé selon la revendication 10,
**caractérisé en ce que**
des liants ayant des plages de tailles de particules entre 0,1 µm et 50 µm et/ou des ciments fins ayant des plages de tailles de particules entre 0,1 µm et 10 µm sont utilisés.
